# EUROPEAN PATENT SPECIFICATION

(11) **EP 1 544 657 B1**
(45) Date of publication and mention of the grant of the patent: **04.04.2012**
(21) Application number: 04077996.9
(22) Date of filing: 01.11.2004
(51) Int. Cl.: G02B 6/00

(54) **Broadband full white reflective display structure**
Breitbandige reflektive Anzeigevorrichtung
Dispositif d'affichage réflectif à bande large

(30) Priority: 19.12.2003 US 531288 P
(43) Date of publication of application: 22.06.2005
(73) Proprietor: BARCO N.V., 8500 Kortrijk (BE)
(72) Inventor: Thielemans, Robbie, 9810 Nazareth (BE)
(74) Representative: Bird, Ariane

(56) References cited:
- EP-A- 0 520 368
- WO-A-03/032058
- US-A- 5 542 016
- US-A- 5 659 643
- US-A1- 2002 114 148
- US-A1- 2002 176 035
- US-B1- 6 490 104

## Description

### Technical field of the invention

The present invention relates to a reflective colour display with improved image quality and methods of driving and manufacturing the same.

### Background of the invention

Reflective colour displays, such as e.g. LCD displays, are known to suffer from colour shift in function of the viewing angle.

The published US Patent Application No 2002/0176035 describes a reflection type semiconductor display device which can take in light other than incident light on a liquid crystal panel. By combining the semiconductor display device with a front light, insufficient amount of light can be supplemented with the front light. The front light providing device comprises a counter substrate, through which light is traveling before the light enters a liquid crystal. Dots are formed on the upper surface of the counter substrate to allow incident light on the liquid crystal.

The US patent No 5 542 016 discloses an optical fiber light emitting apparatus comprising at least one optical fiber arranged in a repeating, recurrent pattern extending substantially throughout a predetermined area. The optical fiber has a plurality of locations along the length thereof permitting light entering at least one end of the optical fiber for transmission therein to be selectively emitted by the optical fiber at the plurality of locations for producing substantially uniform illumination substantially throughout the predetermined area.

### Summary of the invention

It is an object of the present invention to provide a reflective full colour display that has an improved image quality as well as a method of operating and manufacturing the same.

The above objective is accomplished by a method and a device according to the independent claims. Particular embodiments of the invention are described in the dependent claims.

The present invention provides a display panel having a front side and a rear side; the display panel comprises a plurality of rows of addressable pixelated reflective light modulating means, at least one longitudinal light guiding structure having at least one emissive light source and at least one of a first and second end. Light coming from said at least one emissive light source is projected across the display panel through said at least one longitudinal light guiding structure and is reflected by said light modulating means through an angle towards the front side. The at least one longitudinal light guiding structure has a transparent coating such that light coming from said at least one emissive light source is internally reflected in the light guiding structure. This coating is removed at selected positions, at the side of the light guiding structure directed to the reflective light modulating means, so as to guide light coming from said at least one emissive light source towards the plurality of light modulating means. These selected positions coincide with the active reflective regions of the reflective light modulating means.

According to a further embodiment, for each row of light modulating means of the display panel a longitudinal light guiding structure may be provided. According to still a further embodiment, the longitudinal light guiding structure may comprise an optical fiber. According to still a further embodiment,the at least one longitudinal light guiding structure may comprise a light pipe array.

According to still a further embodiment,the display panel may comprise at least one emissive light source at the first end and a reflector at the second end.

According to still a further embodiment, the display panel may comprise at least one emissive light source at the first end and at least one emissive light source at the second end.

According to still a further embodiment, each emissive light source may comprise at least one LED.

According to still a further embodiment, each emissive light source may comprises a monochrome LED or a combination of LED's providing a full-color light source.

According to still a further embodiment, each emissive light source may comprise three monochrome LED's respectively emitting light of three primary colors, and each emissive light source may be driven in accordance with field-sequential color emission.

According to still a further embodiment, the reflective light modulating means may be an iMoD reflective display.

According to still a further embodiment, the display panel of claims may further comprise means for driving the combination of LED's providing a full-color light source and said light modulating means, so that a full-color image is displayed by field sequential color display.

The present invention provides a method for displaying an image onto a display, the display having a front side and a rear side, a light panel with a plurality or rows of light modulating means, at least one longitudinal with a coating provided light guiding structure, connected to said light panel and having at least one emissive light source and at least one of a first and second end. The method comprises driving said light modulating means in accordance with the image to be displayed, guiding light into and through said at least one longitudinal light guiding structure across the panel, reflecting said light onto the said modulating means through selected positions of the longitudinal light guiding structure where the coating has been removed, said selected positions coinciding with the active reflective regions of the reflective light modulating means whereby light coming from said at least one emissive light source is reflected through an angle towards the front side by said light modulating means.

According to a further embodiment, each emissive light source may comprise three monochrome LED's respectively emitting light of three primary colors, and driving said light modulating means and said three monochrome LED's may be coordinated so that image is displayed by field sequential color emission.

A third aspect of the present invention includes a manufacturing method for manufacturing a display with the above characteristics.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figs. 1a and b show a side elevation cross-section and a top view of a display in accordance with an embodiment of the present invention, respectively.
Figs. 2a and b show a cross-sectional view and a top view of another embodiment of the present invention, respectively.
Fig. 3 is a schematic cross-sectional view of a polarisation based reflective display structure according to an embodiment of the present invention.
Fig. 4 and Fig. 5 are a three-dimensional view and a cross-sectional view respectively of a reflective display structure using optical fibres according to an embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

The present invention provides a reflective monochromatic or full colour display.

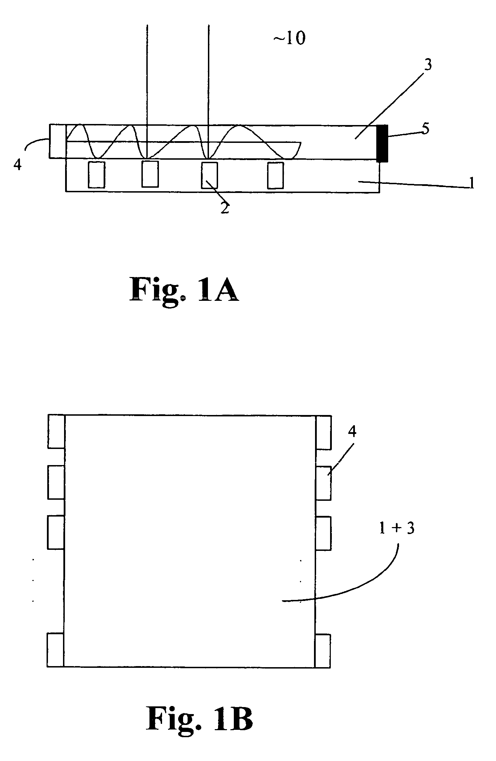

Fig. 1 illustrates a display 10 according to a preferred embodiment of the present invention. The display 10 comprises a reflective optoelectronic device 1, which may for example be a digital mirror display (DMD) or an interferometric modulator (iMoD) or a reflective liquid crystal display (LCD). The reflective optoelectronic device 1 comprises addressable elements. For example, the reflective optoelectronic device 1 comprises a plurality of rows of pixelated light modulating means 2 which may for example be digital mirror devices or liquid crystal cells. At least one light guiding structure 3 is connected to the reflective optoelectronic device 1. In this preferred embodiment of the invention a plurality of light guiding structures 3 may be provided. The light guiding structures 3 in this embodiment may comprise for example optical fibres or other forms of light pipes. Each light guiding structure 3 comprises a first and a second end and has at least one emissive light source 4 at at least one of the first or second end. In the preferred embodiment of Fig. 1, an emissive light source 4 is provided at one end of the light guiding structure 3 and a reflector 5 is provided at the second end of the light guiding structure 3. The emissive light source 4 may for example comprise a full colour light emitting diode (LED), a monochrome LED or several monochrome LEDs respectively emitting light of the primary colours, e.g. red, green and blue or other combinations of primary colours which, in combination, can form white light. It is advantageous for the device according to the present invention if the emissive light sources emit a narrow spectrum of each primary colour. In the latter case, thus when 3 monochrome LEDs are used which respectively emit red, green or blue, and the red, green and blue information for each light modulating means is presented simultaneously but through elements that are physically separated, it is said to be employing the spatial colour type. The three primary-colour images are presented such that the eye sees them simultaneously, occupying the same image plane and location, and so the appearance of a full-colour image results. However, it is preferred to present the three primary-colour images in the same location but separated in time. For example, the red image might be seen first, then the green, and then the blue. If this sequence is repeated rapidly enough, the eye cannot distinguish the separate colour images, which are also called fields, and again perceives a single full-colour image. This is referred to as a sequential colour display system, or sometimes as field-sequential colour type. Obviously, the interface requirements for the two are considerably different. In the spatial-colour types, the information for the red, green, and blue values for each light modulating means 2 must be transmitted essentially simultaneously, or at least sufficiently close in time such that the display can recover all three and present them together.

The light guiding structure 3 is used to guide the light from the emissive light source 4 to the reflective optoelectronic device 1, so that the light from the emissive light source 4 reflects on the reflective optoelectronic device 1, e.g. on the pixelated light modulating means 2. An appropriate means (not shown in the figure) can furthermore be used to couple the light from the emissive light source 4 into the light guiding structure 3. To make sure that the light coming from the emissive light source 4 and sent into the light guiding structure 3, does not immediately leave the light guiding structure 3, the light guiding structure 3 may be provided with a coating, in such a way that light coming from the emissive light source 4 is either internally reflected in the light guiding structure 3 or guided towards the light modulating means 2, and that light coming from the emissive light source 4 and being reflected by the light modulating means 2 in a direction substantially perpendicular to the plane of the reflective optoelectronic device 1 is sent out of the light guiding structure 3.

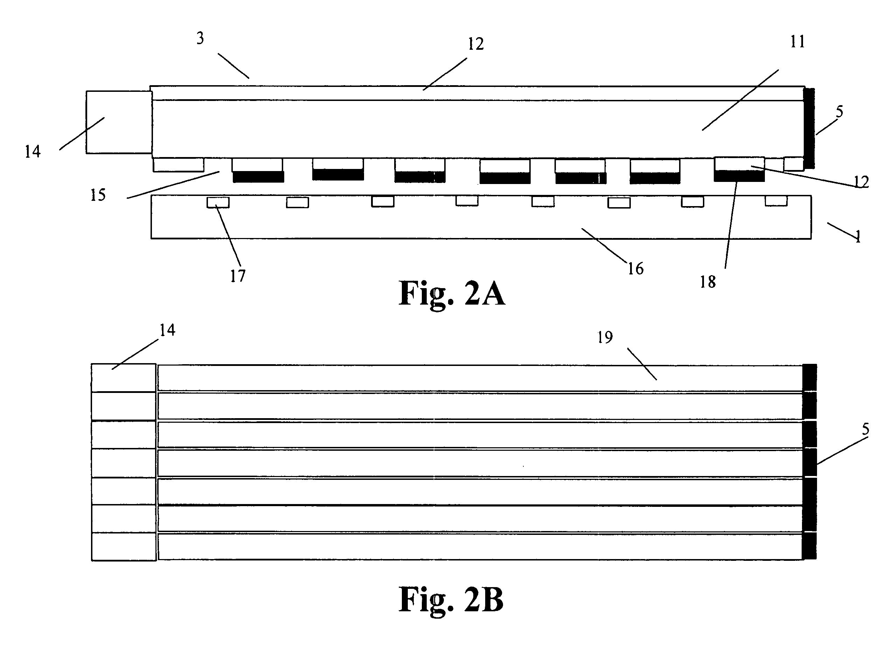

Fig. 2a shows a cross-section through a specific embodiment of the present invention. It comprises a light guiding structure 3 and a reflective optoelectronic device 1. The light guiding structure 3 has a core 11 of transparent material, such as e.g. glass. The core 11 of transparent material may be, but does not need to be, covered by a transparent coating 12, for example to get rid of ambient light. The coating 12 may be present at the bottom side of the light guiding structure 3 only. The material of the core 11 and the coating 12 or cladding material preferably are optically clear but have widely differing refractive indices so as to obtain the internal reflection. It is known that, the higher the difference in refractive indices of core 11 and coating 12, the higher the angle of incidence of light from the emissive light source 14 which adds to the total internal reflection. The light guiding structure 3 is represented in the drawings to be rectangular in cross-section. For a volume that is rectangular in cross-section, when TIR occurs on the top surface, it will also occur on the bottom surface since it is rectangular. As a result, the light that does not leave the light guiding structure directly but is reflected back through TIR on the top surface will also reflect back through TIR on the bottom surface and will therefore never leave the light guiding structure. In particular for this reason, the layout of the light guiding structure is not restricted to such volume that is rectangular in cross-section, but it can have any other suitable shape. In particular it may be provided with an inclination on the top surface so as to change the angle of incident radiation on the bottom surface of the light guide, so that the possibility that the ray exits the light guide through the bottom surface increases, the radiation no longer being restricted to total internal reflection by changing the angle of incident radiation. Other suitable shapes of the light guiding structure 3 may also be used. Alternatively, a light guiding structure 3 which is rectangular in cross-section or has any other suitable shape, may be provided with surface structures to enable light to be coupled out from the light guiding structure 3. Such surface structures may for example be painted or sand-blasted dots. In an alternative embodiment the surface structure may comprise e.g. pyramidal structures with a wide opening angle so as to not couple out light immediately, or an etched surface.

In the embodiment illustrated in Fig. 2a, at selected places 15 on the rear side of the light guiding structure 3, i.e. on that side of the light guiding structure 3 away from a viewer, the coating 12 or cladding is removed so as to extract light from the light guiding structure 3. These positions are arranged to coincide with the active reflective regions 17 of the reflective optoelectronic device 1, e.g. a reflective light modulating device such as a DMD, an iMoD or an LCD. Where the coating 12 has been removed, light from within the core 11 exits the core 11 and is reflected towards the front of the display, i.e. towards a user. Due to the fact that the active reflective regions can be oriented in such a way that the reflected light travels under an angle which equals nearly 90° to the coating 12 and the core 11, there is no internal reflection and the light exits from the front of the display. The active regions 17 of the reflective optoelectronic device 1 may have two positions, a first position in which light exiting from the core 11 is projected forwards, i.e. towards a user of viewer, and a second position in which the light is reflected in another direction so that it cannot be seen. For example, black light absorbing sections 18 may be provided on the coating 12 in between the openings 15, for absorbing light exiting from the core 11 and reflected in the second direction.

As seen in Fig. 2b, the light guiding structure 3 comprises a large number of light guides 19 arranged in parallel so that rows of a active regions 17 of the reflective optoelectronic device 1 can be provided with light. Each of these light guides 19 may be provided by a conventional optical fibre with cladding. The cladding is locally removed from the core 11 to provide the openings 15.

The reflective optoelectronic device 1 is designed in such a way that it reflects full white light, i.e. broadband full white light, at any and every angle. Colour shifts are not preferred and are best avoided. The amount of reflected light may be modulated on a pixel-by-pixel basis by, e.g. movement of reflective elements or by changes in filtering/opacity properties.

The present invention furthermore provides a method for displaying an image onto a reflective display according to this invention. The method comprises the following subsequent steps.

In a first step, the light modulating means 2 of a reflective optoelectronic device 1 are driven in order to set the light modulating means 2 to a predetermined position depending on the image that is to be displayed. Light coming from an emissive light source 4 is coupled in into the light guiding structure 3 and is guided so as to reflect onto the light modulating means 2. The light that has been reflected on the light modulating means 2 is then either reflected in a direction substantially perpendicular to the plane of the reflective optoelectronic device 1 or absorbed by the light modulating means 2. Whether the light is reflected or absorbed depends on the predetermined position of the light modulating means 2, and thus on the image to be displayed. In a last step, the light reflected by the light modulating means 2 in a direction substantially perpendicular to the plane of the reflecting display is coupled out the light guiding structure 3 for making it available to the viewer.

From the above certain aspects of the present invention will be understood. Several emissive light sources are placed at the side of a reflective display, e.g. an iMoD reflective display. The emissive light sources can e.g. be several full colour LEDs (or several monochrome LEDs respectively emitting light of primary colours, e.g. Red, Green, and Blue). It is an advantage that the emissive light sources emit a narrow spectrum of each primary colour. The reflective display is designed in such a way that it reflects full white, i.e. broadband full white under every angle. The amount of reflected light can be modulated on a pixel-base.

A light guiding structure is used to guide the light from the e.g. LEDs to the reflective display, so that the light from the LEDs reflects on the reflective display. An appropriate means is used to couple the light from the LEDs into the light guiding structure. A light pipe array or other optical element array may be used in combination with the light guiding structure in order to couple the light out of the display and at the meanwhile having control over the light distribution that is realised in function of the viewing angle and the contrast ratio.

In order to form a full colour image, firstly the red LEDs are lit and the display is driven in such a way that the appropriate amount of red light is reflected on the appropriate pixels of the reflective display. Secondly, the blue LEDs are lit and the display is driven in such a way that the appropriate amount of blue light is reflected on the appropriate pixels of the reflective display. Finally, the green LEDs are lit and the display is driven in such a way that the appropriate amount of green light is reflected on the appropriate pixels of the reflective display. Thus, a field sequential colour technique is used.

Optical coatings (e.g. an anti-reflection or anti-glare coating) and/or films (e.g. as diffusing film) can be applied to the optical element array.

The edges of the reflective display elements can be coated with an appropriate coating (e.g. an anti-reflection coating or a reflective coating) in order to improve the image quality.

A very important advantage of using emissive light sources e.g. full colour or monochrome LEDs (with a narrow spectral emission) as an illuminator of the reflective displays, is that there can not occur a colour shift in function of the viewing angle: if one wants to generate the red part of the image, only the red LEDs will be lit. Since there is only red light available, no wavelength shift in function of the viewing angle can occur. The same reasoning can be done for the blue and the green light.

The ambient reflected light can still give a colour shift in function of viewing angle. However, if the amount of light reflected from the LEDs exceeds the ambient reflected light, the colour shift created by the ambient light will be very small or even negligible. Another possibility is that the optical element array placed on top of the light guiding structure is designed in such a way that it minimises the colour shift in function of viewing angle caused by the ambient light. It is also possible to include an additional optical element or optical film in order to control the reflected ambient light.

Another advantage of the invention described in this disclosure is that it allows producing high resolution full colour displays since the same pixels can be used to reflect the red, blue and green light. This eliminates the need for having red, green, and blue sub-pixels within a pixel.

The number of emissive light sources that is used to illuminate the reflective display can be made dependent on e.g. pixel pitch, ambient illumination level, reflectivity of the reflective display, required image quality, etc.

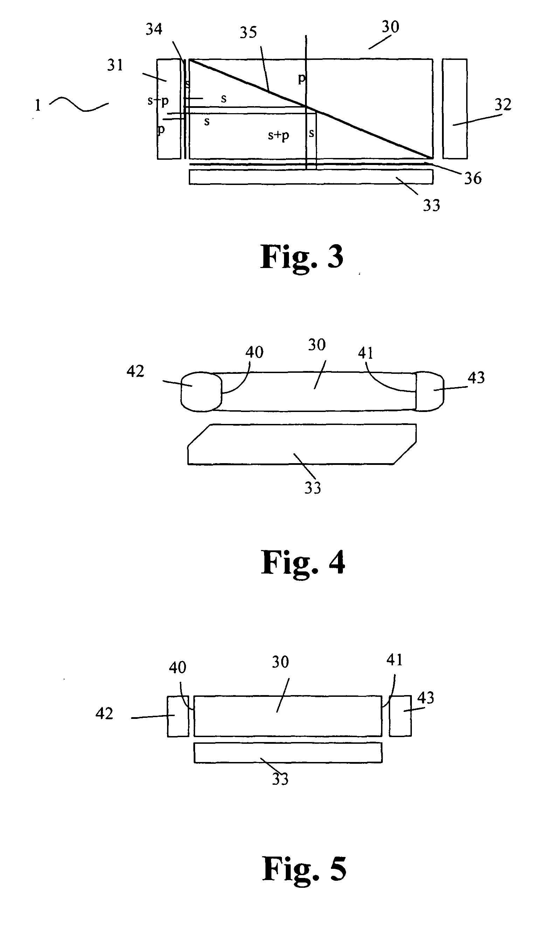

A first example of a broadband full white reflective display structure is given hereinafter, with respect to Fig. 3, which illustrates a polarisation based reflective display structure. It comprises a light guiding structure 30, an emissive light source 31, e.g. a LED array, an optional reflective element 32 and pixelated light modulating means 33. The light guiding structure 30 preferably is made of optical transparent bulk material. A first polariser element 34 is present between the emissive light source 31 and the light guiding structure 30. This first polariser element 34 preferably is a reflective polariser, which transmits light having a first polarisation direction, e.g. the s-polarisation, and reflects light having a second polarisation direction, e.g. the p-polarisation, the first and the second polarisation directions being orthogonal with respect to each other. In the light guiding structure 30, and placed under a non-zero angle with respect to the first polariser element 34, is placed a second polariser element 35. This second polariser element 35 preferably is a reflective polariser, which transmits light having the second polarisation direction, e.g. p-polarisation, and reflects light having the first polarisation direction, e.g. s-polarisation. A diffuser element 36 is provided in between the light guiding structure 30 and the pixelated light modulating means 33.

If the emissive light source 31 emits randomly polarised light, i.e. light comprising both the first and the second polarisation directions, then the light emitted from the light source 31 falls in onto the first polariser element 34, where the part of the light having the first polarisation direction is transmitted and coupled into the light guiding structure 30. The part of the light emitted by the light source 31 and having the second polarisation direction is reflected by the first polariser element 34, back towards the emissive light source 31. The part of the light which was coupled into the light guiding structure 30 falls in onto the second polariser element 35, where it is reflected towards the pixelated light modulating means 33. When leaving the light guiding structure 30, this light, having the first polarisation direction, passes through the diffuser element 36, thus losing its polarisation direction, or thus becoming randomly polarised light again. This randomly polarised light falls in onto the light modulating means 33, where it is reflected towards the front end, of the reflective display device 1, i.e. the side looked at by a viewer. This light, after again having passed through the diffuser element 36, enters the light guiding structure 30 and falls in onto the second polariser element 35, where it is split into light having the first polarisation direction and light having the second polarisation direction. The light having the first polarisation direction is reflected by the second polariser element 35, and the light having the second polarisation direction is transmitted by the second polariser element 35, and can leave the display 1, thus presenting an image to a viewer. The reflected light is reflected back to the first polariser element 34, where it is reflected back towards the second polariser element and so on.

Optionally, the device as described above may comprise a reflective element 32. Ambient light entering the light guiding structure 30 from the front side, i.e. from the viewing side of the display 1, is split into light having the first polarisation direction and light having the second polarisation direction, upon hitting the second polariser element 35. The light having the first polarisation direction is reflected by the second polariser element 35 towards the reflective element 32, while the light having the second polarisation direction is transmitted towards the light modulating means 33, which it hits after having passed through the diffuser element 36. The light reflected from the light modulating means 33 is randomly polarised, and splits, upon impinging onto the second polariser means 35, into light having a first polarisation direction and light having a second polarisation direction, the light having the first polarisation direction being reflected towards the first polariser element 34 and the light having the second polarisation direction being transmitted through the second polariser element 35 towards the viewer.

Since the above design is polarisation dependent, the efficiency of this design significantly increases when the emissive light source 31 emits suitably polarised light, as in that case less light is lost upon impinging on the first polariser element 34.

In a preferred embodiment, not represented in the drawings, a further reflective element, e.g. a mirror, can be placed at the back of the emissive light source 31 so as to recycle the light reflected back at the first and second polariser elements 34, 35.

A further example of a broadband full white reflective display according to the present invention is given hereinafter, and is explained referring to Fig. 4 and Fig. 5. The reflective optoelectronic device 1 represented in these drawings comprises a light guiding structure 30 under the form of an optical fibre with bulk scattering, the optical fibre having a first and a second longitudinal end 40, 41. The light guiding structure 30 is provided adjacent pixelated light modulating means 33. A first emissive light source 42 and a second emissive light source 43 are provided at either longitudinal end 40, 41 of the light guiding structure 30. Light emitted from the first emissive light source 42 and coupled in longitudinally into the light guiding structure 30 at its first longitudinal end 40 is scattered in the bulk of the optical fibre in all directions, and may leave the optical fibre towards the pixelated light modulating means 33 where it is reflected and out coupled at the front side, i.e. towards a viewer. The light guiding structure 30 thus forms a means for substantially changing the propagation direction of the incoupled light, i.e. changing it over an angle between about 70 and 110°.

In a physical display a series of optical fibres as represented in Fig. 4 should be placed on top of the pixelated light modulating means 33. For reasons of simplicity, only one single optical fibre is illustrated in Fig. 4 when illustrating the concept.

Depending on the size of the light modulating means 33, it may be advantageous to use light sources 42, 43 at one or at both sides of the light guiding structure 30. Placing light sources 33 at both sides of the light guiding structure 30 increases the uniformity of illumination of the light modulating means 33, and therefore increases the image quality.

It is to be understood that although preferred embodiments, specific constructions and configurations, as well as materials, have been discussed herein for devices according to the present invention, various changes or modifications in form and detail may be made without departing from the scope and spirit of this invention. For example other optical structures than the ones described can be designed.

## Claims

1. A display panel (10) having a front side and a rear side, the display panel (10) comprising:
- a plurality of rows of addressable pixelated reflective light modulating means (2),
- at least one longitudinal light guiding structure (3) having at least one emissive light source (4) and at least one of a first and second end,
whereby light coming from said at least one emissive light source (4) is projected across the display panel (10) through said at least one longitudinal light guiding structure (3) and is reflected by said light modulating means (2) through an angle towards the front side;
**characterized in that**
said at least one longitudinal light guiding structure (3) has a transparent coating (12) such that light coming from said at least one emissive light source (4) is internally reflected in the light guiding structure (3); and
this coating is removed at selected positions, at the side of the light guiding structure directed to the reflective light modulating means, so as to guide light coming from said at least one emissive light source (4) towards the plurality of light modulating means (2); and
wherein these selected positions coincide with the active reflective regions (17) of the reflective light modulating means (2).

2. A display panel (10) according to claim 1, wherein for each row of light modulating means (2) a longitudinal light guiding structure (19) is provided.

3. A display panel (10) according to any previous claim, wherein the longitudinal light guiding structure (3) comprises an optical fiber.

4. A display panel (10) according to any of claims 1 to 2, wherein the at least one longitudinal light guiding structure (3) comprises a light pipe array.

5. A display panel (10) according to any previous claim, the display panel (10) comprising at least one emissive light source (4) at the first end and a reflector (5) at the second end.

6. A display panel (10) according to any of claims 1 to 4, the display panel (10) comprising at least one emissive light source (4) at the first end and at least one emissive light source (4) at the second end.

7. A display panel (10) according to any previous claim, wherein each emissive light source (4) comprises at least one LED.

8. A display panel (10) according to claim 7, wherein each emissive light source (4) comprises a monochrome LED or a combination of LED's providing a full-color light source.

9. A display panel (10) according to claim 8, wherein each emissive light source (4) comprises three monochrome LED's respectively emitting light of three primary colors, and wherein each emissive light source (40) is driven in accordance with field-sequential color emission.

10. A display panel (10) according to any previous claim, wherein the reflective light modulating means (2) is an iMoD reflective display.

11. A display panel (10) according to any of claims 8 to 10, further comprising means for driving the combination of LED's providing a full-color light source and said light modulating means, so that a full-color image is displayed by field sequential color display.

12. A method for displaying an image onto a display, the display having a front side and a rear side, and
- a light panel (1) with a plurality or rows of light modulating means (2),
- at least one longitudinal light guiding structure (3) provided with a transparent coating, connected to said light panel (1) and having at least one emissive light source (4) at at least one of a first and second end,
the method comprising:
- driving said light modulating means (2) in accordance with the image to be displayed,
- guiding light into and through said at least one longitudinal light guiding structure (3) across the panel (1),
**characterized in that** the method further comprises
- reflecting said light onto the said modulating means through selected positions of the longitudinal light guiding structure where the coating has been removed at the side of the light guiding structure directed to the reflective light modulating means, said selected positions coinciding with the active reflective regions (17) of the reflective light modulating means (2) whereby light coming from said at least one emissive light source is reflected through an angle towards the front side by said light modulating means.

13. The method according to claim 12, each emissive light source (4) comprising three monochrome LED's respectively emitting light of three primary colors, wherein driving said light modulating means (2) and said three monochrome LED's is coordinated so that image is displayed by field sequential color emission.

## Patentansprüche

1. Anzeigetafel (10) mit einer Vorderseite und einer Rückseite, wobei die Anzeigetafel (10) umfasst:
- mehrere Reihen adressierbarer, verpixelter, reflektierender, Licht modulierender Mittel (2);
- mindestens eine längliche Licht leitende Struktur (3) mit mindestens einer ausstrahlenden Lichtquelle (4) und mindestens einem von einem ersten und zweiten Ende,
wobei Licht, das von der mindestens einen ausstrahlenden Lichtquelle (4) kommt, über die Anzeigetafel (10) durch die mindestens eine längliche Licht leitende Struktur (3) projiziert und von den Licht modulierenden Mitteln (2) in einem Winkel zur Vorderseite reflektiert wird;
**dadurch gekennzeichnet, dass** die mindestens eine längliche Licht leitende Struktur (3) eine transparente Beschichtung (12) aufweist, so dass Licht, das von der mindestens einen ausstrahlenden Lichtquelle (4) kommt, in der Licht leitenden Struktur (3) intern reflektiert wird; und
diese Beschichtung an gewählten Positionen an der Seite der Licht leitenden Struktur entfernt ist, die zu den reflektierenden, Licht modulierenden Mitteln gerichtet ist, so dass Licht, das von der mindestens einen ausstrahlenden Lichtquelle (4) kommt, zu den mehreren Licht modulierenden Mitteln (2) gelenkt wird; und
wobei diese ausgewählten Positionen mit den aktiven reflektierenden Regionen (17) der reflektierenden, Licht modulierenden Mitteln (2) übereinstimmen.

2. Anzeigetafel (10) nach Anspruch 1, wobei für jede Reihe von Licht modulierenden Mitteln (2) eine längliche, Licht leitende Struktur (19) vorgesehen ist.

3. Anzeigetafel (10) nach einem der vorangehenden Ansprüche, wobei die längliche, Licht leitende Struktur (3) eine optische Faser umfasst.

4. Anzeigetafel (10) nach einem der Ansprüche 1 bis 2, wobei die mindestens eine längliche, Licht leitende Struktur (3) eine Lichtröhrenanordnung umfasst.

5. Anzeigetafel (10) nach einem der vorangehenden Ansprüche, wobei die Anzeigetafel (10) mindestens eine ausstrahlende Lichtquelle (4) am ersten Ende und einen Reflektor (5) am zweiten Ende umfasst.

6. Anzeigetafel (10) nach einem der Ansprüche 1 bis 4, wobei die Anzeigetafel (10) mindestens eine ausstrahlende Lichtquelle (4) am ersten Ende und mindestens eine ausstrahlende Lichtquelle (4) am zweiten Ende umfasst.

7. Anzeigetafel (10) nach einem der vorangehenden Ansprüche, wobei jede ausstrahlende Lichtquelle (4) mindestens eine LED umfasst.

8. Anzeigetafel (10) nach Anspruch 7, wobei jede ausstrahlende Lichtquelle (4) eine monochrome LED oder eine Kombination von LEDs umfasst, die eine vollfarbige Lichtquelle bereitstellt.

9. Anzeigetafel (10) nach Anspruch 8, wobei jede ausstrahlende Lichtquelle (4) drei monochrome LEDs umfasst, die Licht in drei Primärfarben ausstrahlen, und wobei jede ausstrahlende Lichtquelle (40) entsprechend einer Feld-sequentiellen Farbemission angesteuert wird.

10. Anzeigetafel (10) nach einem der vorangehenden Ansprüche, wobei das reflektierende, Licht modulierende Mittel (2) eine reflektierende iMoD-Anzeige ist.

11. Anzeigetafel (10) nach einem der Ansprüche 8 bis 10, des Weiteren umfassend Mittel zum Ansteuern der Kombination aus LEDs, die eine vollfarbige Lichtquelle bereitstellen, und der Licht modulierenden Mittel, so dass ein vollfarbiges Bild durch Feld-sequentielle Farbanzeige angezeigt wird.

12. Verfahren zum Anzeigen eines Bildes auf einer Anzeige, wobei die Anzeige eine Vorderseite und eine Rückseite aufweist, und
- eine Leuchtplatte (1) mit mehreren Reihen Licht modulierender Mittel (2);
- mindestens eine längliche Licht leitende Struktur (3), die mit einer transparenten Beschichtung versehen ist und die an die Leuchtplatte (1) angeschlossen ist, und die mindestens eine ausstrahlende Lichtquelle (4) an mindestens einem von einem ersten und zweiten Ende aufweist,
wobei das Verfahren umfasst:
- Ansteuern der Licht modulierenden Mittel (2) entsprechend dem anzuzeigenden Bild,
- Leiten von Licht in und durch die mindestens eine längliche, Licht leitende Struktur (3) über die Tafel (1),
**dadurch gekennzeichnet, dass** das Verfahren des Weiteren umfasst
- Reflektieren des Lichts auf das Modulationsmittel durch ausgewählte Positionen der länglichen, Licht leitenden Struktur, wo die Beschichtung an der Seite der Licht leitenden Struktur entfernt wurde, die zu den reflektierenden, Licht modulierenden Mitteln gerichtet ist, wobei diese ausgewählten Positionen mit den aktiven reflektierenden Regionen (17) der reflektierenden, Licht modulierenden Mittel (2) übereinstimmen, wodurch Licht, das von der mindestens einen ausstrahlenden Lichtquelle kommt, von den Licht modulierenden Mitteln (2) in einem Winkel zur Vorderseite reflektiert wird.

13. Verfahren nach Anspruch 12, wobei jede ausstrahlende Lichtquelle (4) drei monochrome LEDs umfasst, die Licht in drei Primärfarben ausstrahlen, und wobei das Ansteuern der Licht modulierenden Mittel (2) und der drei monochromen LEDs so koordiniert ist, dass ein Bild durch Feld-sequentielle Farbemission angezeigt wird.

## Revendications

1. Panneau d'affichage (10) ayant un côté avant et un côté arrière, le panneau d'affichage (10) comprenant :
- une pluralité de rangées de moyens de modulation de lumière réfléchissants pixelisés pouvant être adressés (2),
- au moins une structure de guidage de lumière longitudinale (3) ayant au moins une source de lumière émissive (4) et au moins l'une d'une première et d'une seconde extrémité,
de sorte qu'une lumière provenant de ladite au moins une source de lumière émissive (4) est projetée d'un bout à l'autre du panneau d'affichage (10) par l'intermédiaire de ladite au moins une structure de guidage de lumière longitudinale (3) et est réfléchie par lesdits moyens de modulation de lumière (2) selon un certain angle vers le côté avant ;
**caractérisé en ce que**
ladite au moins une structure de guidage de lumière longitudinale (3) a un revêtement transparent (12) de sorte qu'une lumière provenant de ladite au moins une source de lumière émissive (4) est réfléchie vers l'intérieur dans la structure de guidage de lumière (3) ; et
le revêtement est enlevé à des positions sélectionnées, au niveau du côté de la structure de guidage de lumière dirigé vers les moyens de modulation de lumière réfléchissants, de façon à guider une lumière provenant de ladite au moins une source de lumière émissive (4) vers la pluralité de moyens de modulation de lumière (2) ; et
dans lequel ces positions sélectionnées coïncident avec les régions réfléchissantes actives (17) des moyens de modulation de lumière réfléchissants (2).

2. Panneau d'affichage (10) selon la revendication 1, dans lequel, pour chaque rangée de moyens de modulation de lumière (2), une structure de guidage de lumière longitudinale (19) est prévue.

3. Panneau d'affichage (10) selon l'une quelconque des revendications précédentes, dans lequel la structure de guidage de lumière longitudinale (3) comprend une fibre optique.

4. Panneau d'affichage (10) selon l'une quelconque des revendications 1 à 2, dans lequel l'au moins une structure de guidage de lumière longitudinale (3) comprend un groupement de conduits de lumière.

5. Panneau d'affichage (10) selon l'une quelconque des revendications précédentes, le panneau d'affichage (10) comprenant au moins une source de lumière émissive (4) au niveau de la première extrémité et un réflecteur (5) au niveau de la seconde extrémité.

6. Panneau d'affichage (10) selon l'une quelconque des revendications 1 à 4, le panneau d'affichage (10) comprenant au moins une source de lumière émissive (4) au niveau de la première extrémité et au moins une source de lumière émissive (4) au niveau de la seconde extrémité.

7. Panneau d'affichage (10) selon l'une quelconque des revendications précédentes, dans lequel chaque source de lumière émissive (4) comprend au moins une LED.

8. Panneau d'affichage (10) selon la revendication 7, dans lequel chaque source de lumière émissive (4) comprend une LED monochrome ou une combinaison de LED fournissant une source de lumière en couleurs.

9. Panneau d'affichage (10) selon la revendication 8, dans lequel chaque source de lumière émissive (4) comprend trois LED monochromes émettant respectivement une lumière de trois couleurs fondamentales, et dans lequel chaque source de lumière émissive (40) est pilotée selon une émission de couleur à séquence de champ.

10. Panneau d'affichage (10) selon l'une quelconque des revendications précédentes, dans lequel le moyen de modulation de lumière réfléchissant (2) est un afficheur réfléchissant iMoD.

11. Panneau d'affichage (10) selon l'une quelconque des revendications 8 à 10, comprenant en outre un moyen pour piloter la combinaison de LED fournissant une source de lumière en couleurs et lesdits moyens de modulation de lumière, de sorte qu'une image en couleurs est affichée par un afficheur couleurs à séquence de champ.

12. Procédé pour afficher une image sur un afficheur, l'afficheur ayant un côté avant et un côté arrière, et
- un panneau lumineux (1) avec une pluralité de rangées de moyens de modulation de lumière (2),
- au moins une structure de guidage de lumière longitudinale (3) munie d'un revêtement transparent reliée audit panneau lumineux (1) et ayant au moins une source de lumière émissive (4) au niveau d'au moins l'une d'une première et d'une seconde extrémité,
le procédé comprenant :
- le pilotage desdits moyens de modulation de lumière (2) selon l'image à afficher,
- le guidage d'une lumière dans et à travers ladite au moins une structure de guidage de lumière longitudinale (3) d'un bout à l'autre du panneau (1),
**caractérisé en ce que** le procédé comprend en outre
- la réflexion de ladite lumière sur lesdits moyens de modulation par des positions sélectionnées de la structure de guidage de lumière longitudinale où le revêtement a été enlevé au niveau du côté de la structure de guidage de lumière dirigé vers les moyens de modulation de lumière réfléchissants, lesdites positions sélectionnées coïncidant avec les régions réfléchissantes actives (17) des moyens de modulation de lumière réfléchissants (2) de sorte qu'une lumière provenant de ladite au moins une source de lumière émissive est réfléchie selon un certain angle vers le côté avant par lesdits moyens de modulation de lumière.

13. Procédé selon la revendication 12, chaque source de lumière émissive (4) comprenant trois LED monochromes émettant respectivement une lumière de trois couleurs fondamentales, dans lequel le pilotage desdits moyens de modulation de lumière (2) et desdites trois LED monochromes est coordonné de sorte qu'une image est affichée par une émission de couleur à séquence de champ.
